# EUROPÄISCHE PATENTANMELDUNG

(11) **EP 2 389 820 A1**
(43) Veröffentlichungstag der Anmeldung: **30.11.2011**
(21) Anmeldenummer: 11167608.6
(22) Anmeldetag: 26.05.2011
(51) Int. Cl.: A41D 19/00, B29C 41/00, C08L 11/02

(54) **Handschuh**

(30) Priorität: 26.05.2010 AT 8582010
(71) Anmelder: Semperit Aktiengesellschaft Holding, 1031 Wien (AT)
(72) Erfinder: Schaller, Raimund, 2620 Neunkirchen (AT)
(74) Vertreter: Burger, Hannes

(57) **Zusammenfassung**

Die Erfindung betrifft einen Handschuh aus einem kovalent vernetzten Elastomerfilm, wobei in dem Elastomerfilm zumindest ein Schichtsilikat enthalten ist.

## Beschreibung

Die Erfindung betrifft einen Handschuh aus einem kovalent vernetzten Elastomerfilm, wobei in dem Elastomerfilm zumindest ein Füllstoff enthalten ist, sowie ein Verfahren zum Herstellen dieses Handschuhs durch Tauchen einer Handschuhform in ein Tauchbad, in dem ein Latex vorgelegt ist, wobei in dem Latex zumindest ein Füllstoff enthalten ist.

Der Trend speziell im Untersuchungshandschuhsektor - Untersuchungshandschuhe werden beispielsweise in der Industrie, im Labor oder auch in der Medizin verwendet - geht aufgrund des gestiegenen Rohmaterialpreises in Richtung dünnere Wandstärke. Durch die geringere Wandstärke wird aber vor allem die Schutzfunktion des Handschuhs in Mitleidenschaft gezogen. Da in den letzten Jahren die Anforderungen bezüglich Chemikalienschutzes ebenfalls gestiegen sind, ist dieser Trend dem Bedürfnis der Anwender entgegengesetzt.

Um die Kosten für die Herstellung derartiger Handschuhe in den Griff zu bekommen, werden die Handschuhe mit Füllstoffen versetzt. Dazu wird derzeit überwiegend Kreide eingesetzt. Kreide hat die Eigenschaft, die Festigkeiten des Elastomerhandschuhs sowohl unmittelbar nach der Herstellung als auch nach der Alterung zu reduzieren und wird darüber hinaus die Chemikalienbeständigkeit ebenfalls massiv negativ beeinflusst. Zudem haben derartige Handschuhe den Nachteil, dass diese nach der Sterilisation zur Graufärbung neigen.

Zur Verbesserung der Chemikalienbeständigkeit derartiger Handschuhe ist es aus dem Stand der Technik bekannt, so genannte Laminate einzusetzen, also mehrschichtige Handschuhaufbauten zu wählen. Beispielsweise beschreibt die US 2005/0044609 A1 einen Handschuh aus einem PVC-Substrat, auf dem eine Barriereschicht angeordnet wird, die ein acrylisches Polymer umfasst mit einer Glastemperatur zwischen - 30 °C und + 30 °C, um damit den chemischen Permeationskoeffizienten zu verbessern. Nachteilig an derartigen mehrschichtigen Aufbauten ist, dass damit wiederum höhere Herstellkosten durch öfteres Tauchen der Handschuhe verbunden sind.

Es ist daher Aufgabe der Erfindung einen dünnwandigen Untersuchungshandschuh bereitzustellen, der kostengünstig herstellbar ist.

Diese Aufgabe der Erfindung wird bei dem eingangs genannten Handschuh dadurch gelöst, dass der Füllstoff ein Schichtsilikat ist, unabhängig davon durch das Verfahren zum Herstellen dieses Handschuhs, bei dem als Füllstoff ein Schichtsilikat eingesetzt wird und der Füllstoff vor der Zugabe zu dem Latex in eine wässrige Dispersion überführt wird, sowie weiters durch die Verwendung eines, ein Schichtsilikat umfassenden Füllstoffes, insbesondere von Kaolin, zur Herstellung eines Handschuhs aus einem Elastomerfilm.

Überraschend hat sich gezeigt, dass durch den Austausch des üblicherweise durch Kreide gebildeten Füllstoffes durch ein Schichtsilikat eine signifikante Verbesserung des Permeationswiderstandes zumindest für einige Chemikalien erreicht werden kann. Der Grund hierfür liegt wahrscheinlich darin, dass durch das Schichtsilikat, das heißt die einzelnen Schichten, eine Art "Barriere" im Handschuhmaterial selbst, das heißt im Elastomerfilm, aufgebaut werden kann, sodass also Chemikalien, die in das Handschuhmaterial eindringen, besser bzw. für eine längere Zeitspanne zwischen diesen Schichten zurückgehalten werden können, insbesondere aufgrund der Van der Waalsschen-Wechselwirkungen zwischen den Schichtatomen und den Atomen der Chemikalien. Durch das Eindringen der Chemikalien zwischen die Schichten kommt es gegebenenfalls zu einem geringfügigen Aufquellen des Schichtsilikates, sodass in das umgebende Elastomermaterial ein geringfügiger Druck eingeleitet wird und damit ebenfalls die Permeation dieser Chemikalien durch das Handschuhmaterial selbst verzögert wird. Von Vorteil ist dabei, wenn die Elastomermoleküle kovalent miteinander vernetzt sind um damit das Aufquillen des Elastomerfilms selbst zumindest großteils zu verhindern, da ansonsten die Permeationszeiten durch diese erhöhte Quellung des Elastomers wiederum reduziert werden würden. Es ist also mit dem erfindungsgemäßen Handschuh möglich, diesen mit geringeren Wandstärken, verglichen mit jenen Handschuhen die mit Kreide gefüllt sind, herzustellen, wobei die mechanischen Eigenschaften jenen mit Kreide gefüllten zumindest annähernd vergleichbar sind. Andererseits ist es möglich, höhere Permeationszeiten zu realisieren bei gleicher Wandstärke wie bei Handschuhen nach dem Stand der Technik. Von Vorteil ist weiters, dass durch die Sterilisation der Handschuhe, beispielsweise mittels elektromagnetischer Strahlung wie Elektronenstrahlung oder Gammastrahlung, keine Grauverfärbung eintritt. Bevorzugt wird der Füllstoff, das heißt das Schichtsilikat, vor der Zugabe zu dem Latex in eine wässrige Dispersion überführt, um damit eine homogenere Verteilung dieses Füllstoffes innerhalb des Elastomers zu erreichen, insbesondere einer Agglomeratbildung vorzubeugen.

Bevorzugt ist, wenn der Elastomerfilm bei einer Schichtdicke von 1mm einen Permeationswiderstand nach DIN EN 374-3 von mindestens 14 Minuten, insbesondere mindestens 16 Minuten, vorzugsweise mindestens 18 Minuten, bis zum Durchbruch des Lösungsmittels Isopropanol aufweist.

Insbesondere kann der Handschuh eine Schichtdicke aufweisen, die ausgewählt ist aus einem Bereich mit einer unteren Grenze von 0,05 mm und einer oberen Grenze von 0,4 mm bzw. die ausgewählt ist aus einem Bereich mit einer unteren Grenze von 0,1 mm und einer oberen Grenze von 0,3 mm.

Gemäß einer Ausführungsvariante der Erfindung ist vorgesehen, dass der Füllstoff ein Tonmineral ist. Tonminerale bieten den Vorteil, dass sie einerseits im Vergleich zu synthetisch hergestellten Schichtsilikaten kostengünstig verfügbar sind und darüber hinaus haben Tonminerale den Vorteil, dass sie bereits zum überwiegenden Anteil sehr feinkörnig vorliegen, insbesondere mit Partikelgrößen von kleiner 5 µm, insbesondere kleiner 2 µm. Es ist damit eine entsprechend homogene, feine Verteilung des Füllstoffes im Elastomerfilm erreichbar.

Besonders gute Ergebnisse im Hinblick auf eine Erhöhung des Permeationswiderstandes wurden erreicht, wenn als Tonmineral ein Mineral eingesetzt wird, dass ausgewählt ist aus einer Gruppe umfassend Kaolinit, Dickit, Nakrit, Halloysit, Allophan oder Imogolit bzw. Mischungen hiervon bzw. das Tonmineral gemäß einer anderen Ausführungsvariante durch Kaolin und/oder Talkum gebildet ist. Insbesondere mit Kaolin kann auch eine Verbesserung der mechanischen Eigenschaften des Elastomerhandschuhs erreicht werden, insbesondere im Hinblick auf die Reißfestigkeit bzw. den Weiterreißwiderstand des Handschuhs. Weiters kann durch die Verwendung von Kaolin und/oder Talkum auch die Gasdurchlässigkeit des Handschuhs reduziert werden.

Von Vorteil ist es dabei, wenn das Kaolin einen Kaolinitanteil von zumindest 70 Gew.-% aufweist, wobei der Rest durch übliche in Tonmineralien vorkommende Begleitstoffe, wie Quarz oder glimmerähnliche Silikate, gebildet sein kann. Bevorzugt weist das Kaolin einen Kaolinitanteil von zumindest 80 Gew.-%, insbesondere zumindest 90 Gew.-% auf.

Es ist weiters möglich, dass das Tonmineral hart-calziniert ist, zur weiteren Verbesserung der mechanischen Eigenschaften des Handschuhs.

In einer bevorzugten Ausführungsvariante ist vorgesehen, dass der Anteil des Füllstoffs an dem Elastomerfilm ausgewählt ist aus einem Bereich mit einer unteren Grenze von 5 phr und einer oberen Grenze von 30 phr (phr: particles per 100 parts rubber). Unterhalb von 5 phr wurde zwar eine Verbesserung des Permeationswiderstandes beobachtete, jedoch nicht im gewünschten Ausmaß für die Erfindung. Mit einem Anteil von größer als 30 phr nimmt die Reißfestigkeit des Handschuhs ab, sodass der Vorteil der besseren Chemikalienbeständigkeit, das heißt des größeren Permeationswiderstandes, den Nachteil der verringerten Reißfestigkeit des Handschuhs nicht aufwiegt.

Insbesondere ist der Füllstoff in einem Anteil enthalten, der ausgewählt ist aus einem Bereich mit einer unteren Grenze von 10 phr und einer oberen Grenze von 25 phr, vorzugsweise mit einer unteren Grenze von 12 phr und einer oberen Grenze von 20 phr.

Es ist weiters von Vorteil, wenn der Füllstoff partikulär vorliegt, wobei 50 % der Partikel einen Partikeldurchmesser von maximal 10 µm aufweisen, um damit eine bessere Verteilung im Elastomerfilm zu erreichen.

Insbesondere ist es von Vorteil, wenn zumindest 60 % der Partikel einen Partikeldurchmesser von maximal 10 µm aufweisen, vorzugsweise wenn zumindest 75 % der Partikel einen Partikeldurchmesser von maximal 10 µm aufweisen.

Gemäß einer weiteren Ausführungsvariante ist vorgesehen, dass der Partikeldurchmesser der größten Partikel maximal 30 µm beträgt. Es konnte nämlich beobachtet werden, dass Partikel, die einen größeren Durchmesser als 30 µm aufweisen, Störstellen innerhalb des Elastomerfilms darstellen und somit die mechanischen Eigenschaften verschlechtert werden.

Vorzugsweise wird der Füllstoff partikulär eingesetzt, wobei der Partikeldurchmesser der größten Partikel maximal 20 µm beträgt, insbesondere maximal 10 µm beträgt.

Nach einer anderen Ausführungsvariante der Erfindung ist vorgesehen, dass der Füllstoff eine volumenspezifische Oberfläche von maximal 40 m²/cm³, insbesondere maximal 25 m²/cm³, vorzugsweise maximal 20 m²/cm³, gemessen nach der BET-Methode (DIN ISO 9277:2003-05) aufweist. Die Verwendung von Füllstoffen mit höheren volumenspezifischen Oberflächen führt dazu, dass in den Elastomerfilm eindringende Chemikalien bzw. Lösungsmittel zu einem höheren Anteil an dem Füllstoff angebunden werden und damit zu einer höheren Quellung des Schichtsilikates führen, wodurch gerade bei höheren Anteilen an Füllstoff am Elastomerfilm die mechanische Eigenschaften, insbesondere die Reißfestigkeit, darunter leidet.

Der Elastomerfilm ist bevorzugt aus einem Naturkautschuklatex hergestellt, da dieser nicht nur vergleichsweise kostengünstig hergestellt werden kann, sondern auch eine besondere Wechselwirkung (Van der Waal) zwischen den Schichtsilikaten und dem Naturkautschuklatex beobachtet werden konnte.

Wie bereits voranstehend erwähnt, ist es besonders von Vorteil, dass der Handschuh einschichtig aus einem einzigen Elastomerfilm hergestellt werden kann, wodurch eine entsprechende Kostenoptimierung erreichbar ist.

Gemäß einer Ausführungsvariante des Verfahrens ist vorgesehen, dass die Dispersion vor der Vorvernetzung des Latex diesem beigegeben wird, also beispielsweise vor der Reifung des Latex, wodurch eine bessere Einbindung des Füllstoffes in den Elastomerfilm erreicht wird.

Um einen möglichst hohen Füllstoffanteil am Elastomerfilm und damit eine entsprechend hohe Erhöhung des Permeationswiderstandes zu erzielen, ist es von Vorteil, wenn die Vorvernetzung bis zu einem Vernetzungsgrad von maximal 96 % (Toluolquellung, 20 °C, ISO 1817) durchgeführt wird.

Insbesondere kann die Vorvernetzung bis zu einem Vernetzungsgrad von maximal 85 % durchgeführt werden, vorzugsweise bis zu einem Vernetzungsgrad von maximal 80 °70, da damit der Füllstoff besser in die Elastomermatrix eingebunden bzw. eingebettet ist.

Es besteht auch die Möglichkeit, den Füllstoff kovalent an die Matrix anzubinden, z.B. über Silane oder dergleichen.

Zum besseren Verständnis der Erfindung wird diese anhand der nachfolgenden Beispiele näher erläutert.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

Die Herstellung der Handschuhe erfolgt mit Ausnahme der Verwendung eines Schichtsilikats als Füllstoff dem Stand der Technik entsprechend. Ein derartiger Handschuh kann also beispielsweise nach dem folgenden Tauchverfahren hergestellt werden.

In einem Compoundierungsschritt werden gegebenenfalls die für einen Vorvulkanisationsschritt erforderlichen Chemikalien dem Latex beigemischt und erfolgt gegebenenfalls eine Homogenisierung des Latex. In der Folge wird der gegebenenfalls vorvulkanisierte Latex in eine Kettentauchanlage überführt, wo er die Schritte Tauchen, Rändern, Nass-Leaching, Trocken, gegebenenfalls Trocken-Leaching, gegebenenfalls Pudern, Abziehen, Verpackung, Qualitätskontrolle und gegebenenfalls Sterilisation durchläuft. Die Tauchformen werden vor dem erneuten Tauchen in Latex einer Reinigung, einer Koagulanttauchung und einer Trocknung unterzogen.

Die Tauchformen bestehen üblicherweise aus Porzellan, können aber auch aus Glas, Edelstahl oder Kunststoff angefertigt sein. Eine saubere Oberfläche dieser Tauchform ist ein Kriterium für eine homogene Abscheidung des Latexfilms im anschließenden Tauchprozess. Sowohl basische als auch saure Lösungen, oxidierende Verbindungen, Tenside oder auch häufig eine Kombination dieser Reinigungschemikalien wird für die Entfettung und Säuberung der Tauchformen eingesetzt.

Die Zusammensetzung des Koagulationsbades ist unter anderem ein Parameter für die Schichtdicke des abgeschiedenen Latexfilms. Das Koagulationsbad setzt sich üblicherweise aus dem Koagulanten (üblicherweise CaN0₃, wahlweise auch CaCl₂), dem Trennmittel (CaCO₃) und dem Benetzungsmittel (kationische Tenside) zusammen. Das Trennmittel erleichtert das Abziehen des Handschuhs von der Tauchform, wobei in einigen puderfreien Prozessen andere anorganische Salze und zum Teil auch Polymere verwendet werden können, wie dies aus dem Stan der Technik bekannt ist.

Die abgeschiedenen positiven Metallionen auf der Oberfläche der Tauchform bewirken eine Entladung und in weiterer Folge die Koagulierung des negativ stabilisierten Latex, sobald die Form in den vorvernetzten Latex taucht. Abhängig von der Eintauchzeit und der Konzentration der Metallionen werden unterschiedliche Filmdicken erhalten.

Handschuhe können mit einem gerollten Rand am unteren Schaftende hergestellt werden. Zu diesem Zweck wird ein Teil des abgeschiedenen Films beim Rändern durch rotierende Bürsten mechanisch zusammen gerollt. Durch die Klebrigkeit des Films bleibt der gerollte Wulstrand über den gesamten Herstellungsprozess bestehen.

Dem nassen Latexfilm wird durch eine kurze Antrocknung mechanische Festigkeit verliehen bevor das Nass-Leaching erfolgt. Durch das Tauchen der Latexfilme in ein warmes (- 50°) Wasserbad werden neben dem Koagulanten auch Proteine zumindest teilweise ausgewaschen.

Zur Herstellung puderfreier Handschuhe kann anstelle des Puderns eine Oberflächenbehandlung, z.B. durch Chlorierung, erfolgen, um die An- und Ausziehbarkeit der Handschuhe zu verbessern. Es sind aber auch Gleitbeschichtungen möglich.

Da Tauchverfahren für Handschuhe an sich aus dem Stand der Technik bekannt sind, sei der Fachmann beispielsweise auf die EP 0 856 294 A, insbesondere die Fig. 4 und 5 dieser EP-A sowie die zugehörigen Ausführungen in Spalte 14, Zeile 38 bis Spalte 18, Zeile 51 verwiesen, insbesondere in Hinblick auf die Ausführungen bezüglich der Koagulation, des Tauchens in Latex, diverser Waschvorgänge, diverser Nachbehandlungen, wie z.B. Chlorieren bzw. Halogenieren der Oberfläche der Handschuhe bzw. des Latex, die Herstellung von Oberflächenrauhigkeiten bzw. die Bereitstellung von puderfreien Handschuhen, etc.. Es soll damit auf unnötige Wiederholungen des Standes der Technik im Zusammenhang mit vorliegender Erfindung verzichtet werden und bildet daher die EP 0 856 294 A1 zumindest im besagten Umfang einen Teil der Offenbarung gegenständlicher Anmeldung.

Der Kern der Erfindung liegt, wie bereits voranstehend ausgeführt, in der Herstellung von Handschuhen mit erhöhtem Permeationswiderstand gegen Chemikalien, das heißt, dass diese Handschuhe dem Durchwandern von Chemikalien durch den Elastomerfilm einen höheren Widerstand entgegensetzen und somit die Permeationszeit höher ist. Dies wird durch den Einsatz eines Schichtsilikats erreicht. Als Schichtsilikat wird dabei insbesondere ein Tonmineral, vorzugsweise aus einer Gruppe umfassend Kaolinit, Dickit, Nakrit, Halloysit, Allophan, Imogilit verwendet. Insbesondere kann das Tonmineral durch Kaolin und/oder Talkum gebildet sein, wobei der Anteil des schichtsilikatischen Füllstoffes zwischen 5 phr und 30 phr betragen kann. Sofern kein reiner Kaolinit verwendet wird, ist es von Vorteil, wenn das Kaolin einen Kaolinitanteil von zumindest 70 Gew.-% aufweist. Neben den verbesserten Permeationszeiten, das heißt den höheren Permeationszeiten, weisen diese Handschuhe ein verbessertes Quellverhalten gegen verschiedene Lösungsmittel auf, das heißt also dass die Quellung geringfügiger ist als im Vergleich zu Handschuhen ohne den erfindungsgemäßen Füllstoff. Des Weiteren kann auch die Gasdurchlässigkeit derartiger Handschuhe verbessert sein.

Es ist auch möglich, dass das Schichtsilikat oberflächenmodifiziert und/oder hart-calziniert eingesetzt wird. Beispielsweise kann das Schichtsilikat silanisiert werden. Durch die Modifizierung der OH-Gruppen mit Silanen kann die Wechselwirkung mit polaren Kautschuken beeinflusst werden. Beispielsweise kann mit monofunktionellen Silanen, wie Triethoxypropylsilan, Trimethoxyoctylsilan Triethoxyoctylsilan, durch die Hydrophobierung eine niedrigeres Viskosität des Latex und damit eine bessere Filmbildung erreicht werden. Durch die Verwendung von bifunktionellen Organosilanen, wie 3-Chloropropyltriethoxysilan, Bis (3-Triethoxysiliypropyl) Tetrasulfan, Triethoxy (3-Thiocyanatopropyl) Silan, insbesondere von bifunktionellen Organosilanen mit vernetzungsaktiven Gruppen (z.B. Vinyl- oder Thiolgruppen), kann eine kovalente Anbindung des Schichtsilikats an den Kautschuk erreicht werden, wodurch beispielsweise höhere Zugfestigkeiten, etc. erreichbar sind.

Bevorzugt wird der schichtsilikatische Füllstoff zuerst in eine wässrige Dispersion überführt, wobei insbesondere partikelförmige Füllstoffe verwendet werden und dabei die Partikelgröße, das heißt der Partikeldurchmesser vorzugsweise so gewählt wird, dass zumindest 50 % einen Partikeldurchmesser von maximal 10 µm aufweisen und weiters bevorzugt der Partikeldurchmesser der größten Partikel maximal 30 µm beträgt. Im Rahmen der Erfindung werden jedoch feine partikelförmige Füllstoffe bevorzugt, das heißt dass das maximale Korn bzw. der maximale Partikeldurchmesser kleiner 30 µm ist und zumindest 50 % der Partikel einen Partikeldurchmesser von maximal 3 µm aufweisen.

Der Füllstoff kann weiters eine volumenspezifische Oberfläche entsprechend voranstehenden Angaben aufweisen.

Vorzugsweise wird der Füllstoff vor dem Zusetzten zum Latex in einem Lösungsmittel, insbesondere Wasser, dispergiert. Diese Füllstoffdispersion wird bevorzugt vor dem Vorvernetzen des Latex in diesen eingemischt. Es ist aber auch möglich, dass die Dispersion nach der Reifung, also nach der Vorvernetzung der Mischung beigesetzt wird.

Es ist weiters von Vorteil, wenn die Vernetzung der Elastomermoleküle bei einem erfindungsgemäßen Handschuh kovalent erfolgt, beispielsweise durch Schwefel, Peroxide oder andere zur Vernetzung führende Materialien, da damit eine erhöhte Quellung des Filmes stark reduziert wird und somit die Permeation weiter verbessert werden kann, das heißt die Permeationszeiten erhöht werden können.

Es ist weiters von Vorteil, wenn die Vorvernetzung des Elastomers nicht zu stark ist, bevor der Handschuh getaucht wird, um die Filmbildung bei dem bei höheren Füllstoffgehalten zu verbessern. Insbesondere werden Vorvernetzungsgrade von maximal 96 % oder maximal 85 %, vorzugsweise maximal 80 %,bevorzugt.

Der Vernetzungsgrad wird über die Quellung bestimmt, wenn der Füllstoff nach der Vorvernetzung eingemischt wird, wenn der Füllstoff allerdings vor der Vernetzung zugegeben wird, kann der Vorvernetzungsgrad zum Beispiel auch über den Modul bestimmt werden.

Für die Herstellung eines erfindungsgemäßen Handschuhs kann beispielsweise folgende Grundrezeptur verwendet werden.
Latex: 100 phr
Stabilisator: 0,1 phr bis 0,5 phr
ZnO: 0,1 phr bis 0,8 phr, bevorzugt 0,3 phr
S: 0,4 phr bis 1,2 phr, bevorzugt 0,8 phr
Zinkdiethyldithiocarbamat: 0,1 phr bis 1 phr, bevorzugt 0,3 phr
Zinkdibutyldithiocarbamat: 0,1 phr bis 1 phr, bevorzugt 0,2 phr
Zink-2-mercaptobenzothiazol: 0 phr bis 0,2 phr, bevorzugt 0,05 phr
1,3-diphenylguanidine: 0 phr bis 0,5 phr, abhängig von der Temperatur der Vorvernetzung bei Raumtemperatur, vorzugsweise bis 0,2 phr
Alterungsschutz: 0,5 phr bis 1,5 phr, bevorzugt 0,8 phr

Als Stabilisator kann beispielsweise KOH oder ein anderer aus dem Stand der Technik bekannter Stabilisator verwendet werden. Alterungsschutzmittel können ebenfalls dem Stand der Technik entsprechend eingesetzt werden.

Diese Mischung wird bevorzugt gereift, wobei diese Reifung bei 30 °C für zum Beispiel 24 Stunden erfolgen kann oder bei 60 °C für 2 bis 4 Stunden.

Vorzugsweise wird als Latex ein Naturkautschuk-Latex verwendet. Es können aber auch andere Elastomere verwendet werden, z.B. Styrol-Butadien-Kautschuke, Butadien-Kautschuke, Isobutylen-Isopren-Kautschuke, Ethylen-Propylen-Dien-Monomere, Nitril-Butadien-Kautschuke, Chloropren-Kautschuke, Fluor-Kautschuke, bzw. Mischungen hiervon.

Daran anschließend kann die wässrige Kaolindispersion zugesetzt werden.

Wie aus den folgenden Tabellen ersichtlich ist konnte durch die Verwendung eines Schichtsilikates, insbesondere Kaolin, eine Verlängerung der Permeationszeiten erreicht werden.

Tabelle 1: Handschuh hergestellt aus Naturkautschuk-Latex, Lösungsmittel Isopropanol, Wandstärke des Handschuhs und Durchbruchzeiten des Lösungsmittels jeweils als Mittelwert aus jeweils zehn Messergebnissen, gemessen nach DIN EN 374-3, Anteil des Füllstoffes jeweils 20 phr.

| Füllstoff | Wandstärke [mm] | Durchbruchzeit [min] | Normiert auf 1 mm Wandstärke [min] |
|---|---|---|---|
| Kaolin¹ | 0,210 | 3,8 | 17,99 |
| (Kaolonitanteil 85 %) | | | |
| Talkum | 0,171 | 2,15 | 12,58 |
| Kreide | 0,250 | 2,7 | 10,8 |

| | | | |
|---|---|---|---|
| 1: ohne Kaolin beträgt die auf lmm Wandstärke normierte Durchbruchzeit 9,8 Minuten | | | |

Ähnliche Ergebnisse wurden mit den Mineralien Dickit, Nakrit, Halloysit, Allophan, Imogolit erziehlt, wobei angemerkt sei, dass generell nicht Naturstoffe verwendet werden müssen, sondern auch Stoffe mit diesen entsprechender Zusammensetzung.

**Tabelle 2: Einfluss des Füllstoffgehaltes (Kaolin):**

| Anteil [phr] | Durchbruchzeit [Min] bei 1 mm Wandstärke | 500 Modul [N] |
|---|---|---|
| 0 | 9,8 | 2,2 |
| 15 | 14,76 | |
| 20 | 17,99 | 4,7 |
| 30 | 18,25 | 8,3 |
| 40 | 19,32 | 12,3 |

Die Ausführungsbeispiele beschreiben mögliche Ausführungsvarianten des Handschuhs, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

## Patentansprüche

1. Handschuh aus einem kovalent vernetzten Elastomerfilm, wobei in dem Elastomerfilm zumindest ein Füllstoff enthalten ist, **dadurch gekennzeichnet, dass** der Füllstoff ein Schichtsilikat ist.

2. Handschuh nach Anspruch 1, **dadurch gekennzeichnet, dass** der Elastomerfilm bei einer Schichtdicke von 1 mm einen Permeationswiderstand nach DIN EN 374-3 von mindestens 14 Minuten bis zum Durchbruch des Lösungsmittels Isopropanol, aufweist.

3. Handschuh nach Anspruch 1 oder 2, **dadurch gekennzeichnet, dass** der zumindest eine Füllstoff ein Tonmineral ist.

4. Handschuh nach Anspruch 3, **dadurch gekennzeichnet, dass** das Tonmineral ausgewählt ist aus einer Gruppe umfassend Kaolinit, Dickit, Nakrit, Halloysit, Allophan, Imogolit.

5. Handschuh nach Anspruch 3, **dadurch gekennzeichnet, dass** das Tonmineral Kaolin und/oder Talkum ist.

6. Handschuh nach Anspruch 5, **dadurch gekennzeichnet, dass** das Kaolin zumindest 70 Gew.-% Kaolinit enthält.

7. Handschuh nach einem der Ansprüche 3 bis 6, **dadurch gekennzeichnet, dass** das Tonmineral hart-calziniert ist.

8. Handschuh nach einem der Ansprüche 1 bis 7, **dadurch gekennzeichnet, dass** der Füllstoff in einem Anteil enthalten ist, der ausgewählt ist aus einem Bereich mit einer unteren Grenze von 5 phr und einer oberen Grenze von 30 phr.

9. Handschuh nach einem der Ansprüche 1 bis 8, **dadurch gekennzeichnet, dass** der Füllstoff partikulär vorliegt, wobei 50 % der Partikel einen Partikeldurchmesser von maximal 10 µm aufweisen.

10. Handschuh nach Anspruch 9, **dadurch gekennzeichnet, dass** der Partikeldurchmesser der größten Partikel maximal 30 µm beträgt.

11. Handschuh nach einem der Ansprüche 1 bis 10, **dadurch gekennzeichnet, dass** der Füllstoff eine volumenspezifische Oberfläche von maximal 40 m²/cm³ aufweist, gemessen nach dem BET-Verfahren.

12. Handschuh nach einem der Ansprüche 1 bis 11, **dadurch gekennzeichnet, dass** der Elastomerfilm aus Naturkautschuk-Latex hergestellt ist.

13. Handschuh nach einem der Ansprüche 1 bis 12, **dadurch gekennzeichnet, dass** der Elastomerfilm einschichtig ist.

14. Verfahren zum Herstellen eines Handschuhs nach einem der Ansprüche 1 bis 12 durch Tauchen einer Handschuhform in ein Tauchbad, in dem ein Latex vorgelegt ist, wobei in dem Latex zumindest ein Füllstoff enthalten ist, **dadurch gekennzeichnet, dass** als Füllstoff ein Schichtsilikat eingesetzt wird und der Füllstoff vor der Zugabe zu dem Latex in eine wässrige Dispersion überführt wird.

15. Verfahren nach Anspruch 14, **dadurch gekennzeichnet, dass** die Dispersion vor der Vorvernetzung dem Latex beigegeben wird.

16. Verfahren nach Anspruch 14 oder 15, **dadurch gekennzeichnet, dass** die Vorvernetzung bis zu einem Vernetzungsgrad von maximal 96 % (Toluolquellung) durchgeführt wird.

17. Verwendung eines Schichtsilikats, insbesondere von Kaolin, als Füllstoff zur Herstellung eines Handschuhs aus einem Elastomerfilm.
